# EUROPÄISCHE PATENTSCHRIFT

(11) **EP 1 654 132 B1**
(45) Veröffentlichungstag und Bekanntmachung des Hinweises auf die Patenterteilung: **12.08.2009**
(21) Anmeldenummer: 04738739.4
(22) Anmeldetag: 19.06.2004
(51) Int. Cl.: B60H 3/00, B60H 1/00, G01N 21/35

(54) **VERFAHREN ZUR REGELUNG EINES UMLUFT- UND/ODER ZULUFTANTEILS IN EINER FAHRGASTZELLE**
METHOD FOR CONTROLLING AN AIR CIRCULATION PART AND/OR AN AIR SUPPLY PART IN A PASSENGER CELL
PROCEDE DE REGULATION DE LA PROPORTION D'AIR DE CIRCULATION ET/OU D'AIR FRAIS DANS UN HABITACLE

(30) Priorität: 07.08.2003 DE 10337750
(43) Veröffentlichungstag der Anmeldung: 10.05.2006
(73) Patentinhaber: ROBERT BOSCH GMBH, 70442 Stuttgart (DE)
(72) Erfinder: ARNDT, Michael, 72762 Reutlingen (DE); LORENZ, Gerd, 72762 Reutlingen (DE); WINKLER, Daniela, 72805 lichtenstein-Unterhausen (DE)
(74) Vertreter: Gleiss & Grosse
(86) Internationale Anmeldenummer: PCT/DE2004/001290
(87) Internationale Veröffentlichungsnummer: WO 2005/014318

(56) Entgegenhaltungen:
- WO-A-89/06608
- DE-A- 3 423 848
- DE-A- 3 431 373
- DE-A- 3 537 818
- US-A- 5 261 415

## Beschreibung

Die Erfindung betrifft ein Verfahren zur Regelung eines Umluft- und/oder Zuluftanteils in einer Fahrgastzelle eines Fahrzeugs gemäß dem Oberbegriff des Anspruchs 1.

### Stand der Technik

In die Fahrgastzelle von Fahrzeugen soll zur Vermeidung eines erhöhten Schadgasgehaltes insbesondere eines erhöhten Kohlendioxidgehaltes in der Luft möglichst ständig Frischluft von außen zugeführt werden. Dadurch wird vermieden, dass der Gehalt an Kohlendioxid in der Luft durch die Atemtätigkeit einer Person in der Fahrgastzelle über eine Komfortschwelle übermäßig ansteigt und zur Beeinträchtigung der Konzentration und zu Ermüdungserscheinungen bei der Person führen würde. Bei Fahrzeugen ist es bekannt, für den der Klimatisierung der Fahrgastzelle dienenden Luftstrom Umluft, also Luft aus dem Fahrzeuginneren und Zuluft, also Luft von außer halb der Fahrgastzelle, zu mischen. Die Umluft und/oder Zuluftanteile werden dabei mit Hilfe einer als Kühl/Heizeinrichtung ausgebildeten Klimaanlage erwärmt oder gekühlt. Die Zumischung von Umluft zur Außenluft erfolgt bei Fahrzeugen unter Energiegesichtspunkten in Abhängigkeit von der gewünschten Fahrgastzellentemperatur oder unter Berücksichtigung der jeweiligen Schadstoffkonzentration der Außenluft.

Die DE 199 13 848 A1 beschreibt als nächster Stand der Technik ein Verfahren zur Regelung eines Umluft- und/oder Zuluftanteils in einer Fahrgastzelle eines Fahrzeuges bei der der Anteil der Umluft an dem der Fahrgastzelle zugeführten Luftstrom mittels eines CO₂-Sensors derart begrenzt wird, dass der Anteil an Kohlendioxid in der Fahrgastzelle einen bestimmten Grenzwert nicht übersteigt. Der CO₂-Sensor kann den CO₂-Anteil der Luft in der Fahrgastzelle und/oder der Zuluft erfassen. Das Ausgangssignal des CO₂-Sensors liegt an einer Steuereinrichtung, die den Anteil der Umluft an dem in der Fahrgastzelle eingeleiteten Luftstrom steuert, an.

Die bekannten Verfahren zur Regelung eines Umluft- und/oder Zuluftanteils in einer Fahrgastzelle arbeiten nicht mit minimiertem Energieaufwand. Zudem ist die Messgenauigkeit der verwendeten Sensoren zur Erfassung von Schadgaskonzentrationen in der Fahrgastzelle von vielen Parametern der Umgebung des Sensors, insbesondere von der Temperatur der Umgebung abhängig.

Die DE 35 37 818 A1 offenbart ein Verfahren zur schadstoffgesteuerten Belüftung einer Fahrgastzelle, bei dem in Abhängigkeit von der Schadstoffkonzentration und der Temperatur außerhalb des Fahrzeugs ein Umluft- und/oder Zuluftanteil gesteuert wird. Dazu ist außerhalb des Fahrzeuges ein Schadstoffsensor mit einem Temperaturfühler angebracht.

### Vorteile der Erfindung

Das erfindungsgemäße Verfahren zur Regelung eines Umluft- und/oder Zuluftanteils in einer Fahrgastzelle eines Fahrzeugs mit den im Anspruch 1 genannten Merkmalen bietet den Vorteil, dass rasch und in exakter reproduzierbarer Weise die Schadgaskonzentration, insbesondere die CO₂-Konzentration in der Luft der Fahrgastzelle erfasst werden kann. Der temperaturkompensierte Sensor zur Erfassung von Schadgaskonzentrationen in der Fahrgastzelle steuert mit seinem, die Temperatur in der Fahrgastzelle darstellenden und mit seinem die Schadgaskonzentration in der Fahrgastzelle darstellenden Signalen eine Steuereinrichtung, beispielsweise einen Servomotor mit einer Umluftklappe, an. Die Umluftklappe kann Teil einer Kühl/Heizeinrichtung, wie etwa einer Klimaanlage sein. Dabei kann entweder ein abwechselnder ausschließlicher Betrieb mit Zuluft oder mit Umluft zur Versorgung der Fahrgastzelle mit Luft dargestellt werden. Es kann auch zweckmäßig sein, die Zuluft- und Umluftanteile in ihrer jeweiligen Größe durch die Steuereinrichtung zu verändern und die Luftversorgung der Fahrgastzelle mit Zuluft und Umluft gleichzeitig darzustellen.

Wird die Luftversorgung der Fahrgastzelle mit Wechselbetrieb zwischen ausschließlich Zuluftbetrieb und ausschließlich Umluftbetrieb dargestellt, so kann bevorzugt der Zuluftbetrieb durchgeführt werden, wenn eine vorgebbare erste Konzentrationsschwelle von Schadgas in der Fahrgastzelle überschritten wird. Auf Umluftbetrieb kann umgeschaltet werden, wenn eine zweite Konzentrationsschwelle, die kleiner als die erste Konzentrationsschwelle ist, in der Luft der Fahrgastzelle unterschritten wird. Auf diese Weise lässt sich eine Komfortschwelle der Schadgaskonzentration in der Fahrgastzelle einhalten.

Beim Mischbetrieb der Fahrgastzelle mit Umluft und Zuluft kann ein vorgebbarer Bereich einer Schadgaskonzentration in der Fahrgastzelle eingehalten werden.

Die Temperaturkompensation des Sensors zur Erfassung von Schadgaskonzentrationen erfolgt nach Maßgabe eines Signals eines Temperatursensors zur Messung der Lufttemperatur in der Fahrgastzelle. Das Signal des Temperatursensors kann auch zur Beschreibung der Temperatur der Zuluft und damit der Außentemperatur der Fahrgastzelle dienen. Um die Kühlleistung einer Klimaanlage des Fahrzeugs und damit den Kraftstoffverbrauch eines Fahrzeugs zu minimieren, steuert die Steuereinrichtung für den Umluft- und/oder Zuluftanteil die Luftzufuhr in die Fahrgastzelle anhand des Signals des Temperatursensors so, dass bei Anstieg der Temperatur auf Umluftbetrieb geschaltet wird oder der Umluftanteil der der Fahrgastzelle zugeführten Luft erhöht wird.

Durch die Verfahren zur Regelung eines Umluft- und/oder Zuluftanteils in einer Fahrgastzelle lässt sich beispielsweise eine Komfortschwelle der CO₂-Konzentration in der Fahrgastzelle von 0,2 Vol.% einstellen. So kann in einer von einer Person besetzten Fahrgastzelle eines Kraftfahrzeugs ein Umluftanteil von etwa 80 % durch die Steuereinrichtung für den Umluft- und/oder Zuluftanteil eingestellt werden, ohne dass eine übliche Komfortschwelle der Schadgaskonzentration überschritten wird.

Ist der Sensor zur Erfassung von Schadgas als CO₂-Sensor ausgebildet, so kann dieser auch zur Leckageüberwachung einer Klimaanlage der Fahrzeugs, welche mit Kohlendioxid als Kältemittel arbeitet; angewandt werden.

Der Sensor zur Erfassung der Schadgaskonzentration in der Fahrgastzelle kommuniziert mit seiner Umgebung entweder mit einer analogen oder bevorzugt mit einer digitalen LIN-Schnittstelle, die verschiedene Betriebsmodi des Sensors erlaubt. Der Sensor zur Erfassung von Schadgaskonzentrationen in der Fahrgastzelle misst die Schadgaskonzentration in einer Meßküvette nach dem Prinzip der photometrischen Gasmessung, wobei mit einer Infrarot-Strahlungsquelle die wellenlängenspezifische Abschwächung bei 4,2 µm bis 4,3 µm Wellenlänge in Abhängigkeit von der Schadgaskonzentration in der Meßküvette gemessen wird.

Der Sensor zur Erfassung von Schadgaskonzentrationen, insbesondere zur Erfassung der CO₂-Konzentration in der Fahrgastzelle, wird bevorzugt als bauliche Einheit mit dem Sensor zur Temperaturmessung der Umgebungstemperatur des Sensors ausgebildet. Weitere vorteilhafte Ausgestaltungsformen ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: ein Flußdiagramm einer Ausführungsvariante eines Verfahrens zur Regelung eines Umluft- und/oder Zuluftanteils in einer Fahrgastzelle mit wechselndem Betrieb mit Umluft oder Zuluft;
- Figur 2: ein Flussdiagramm einer Ausführungsvariante eines Verfahrens zur Regelung eines Umluft- und/oder Zuluftanteils in einer Fahrgastzelle mit Regelung der Größe des Umluflanteils.

### Beschreibung der Ausführungsbeispiele

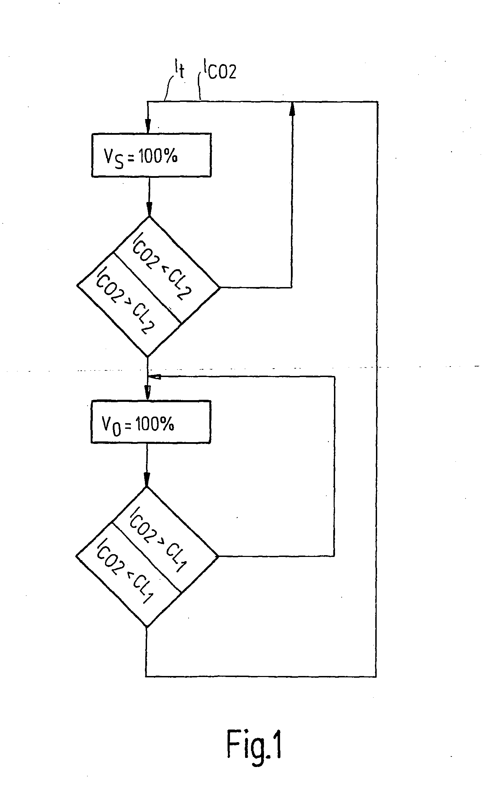

In Figur 1 ist in einem Flussdiagramm ein Verfahren zur Regelung eines Umluft- und/oder Zuluftanteils Vₛ, Vₒ in einer Fahrgastzelle eines Fahrzeugs gezeigt. Ein Gebläse fördert Luft in eine Fahrgastzelle, wobei das Gebläse in der Lage ist Zuluft von außerhalb der Fahrgastzelle als auch Umluft aus dem Inneren der Fahrgastzelle zu entnehmen und der Fahrgastzelle zuzuführen. Eine Steuereinrichtung regelt dabei die Zufuhr von Luft zu dem Gebläse von außerhalb der Fahrgastzelle und/oder von dem Inneren der Fahrgastzelle. Zweckmäßigerweise wird dazu eine Umluftklappe stromauf vor dem Gebläse als Teil der Steuereinrichtung angewandt. Das Gebläse kann einer Kühl/Heizeinrichtung, wie sie als Klimaanlage in Kraftfahrzeugen angewandt wird, nachgeschaltet oder vorgeschaltet sein.

Ein Sensor zur Erfassung von Schadgaskonzentrationen in der Fahrgastzelle, insbesondere ein CO₂-Sensor, welcher zur Stabilisierung seiner Messgenauigkeit temperaturkompensiert ist, steuert mit seinem Temperatursignal Iₜ und seinem, die Schadgaskonzentration in der Fahrgastzelle repräsentierenden Signal l_{CO2} die Steuereinrichtung für den Umluft -und/oder Zuluftanteil Vₛ, Vₒ in der Fahrgastzelle an. Der nicht gezeigte Sensor ist in den genannten Auskhrungsbeispielen als CO₂-Sensor in Form eines Infrarot-Detektors ausgebildet. Der Sensor arbeitet in einem bevorzugten Messbereich von 9 g/m³ bis 54 g/m³ entsprechend 0,5 bis 3 Vol.% CO₂ und ermittelt die CO₂-Konzentration in der Luft der Fahrgastzelle nach dem Prinzip der fotometrischen Gasmessung bei Wellenlängen von 4,2 µm und 4,3 µm und bei einer Referenzwellenlänge zwischen 3,8 µm und 4,0 µm.

Ein Sensor zur Messung der Umgebungstemperatur des Sensors zur Erfassung der Schadgaskonzentration in der Fahrgastzelle dient zur Temperaturkompensation des Sensors zur Erfassung der Schadgaskonzentration. Beide Sensoren bilden bevorzugt eine bauliche Einheit.

Die Steuereinrichtung für den Umluft- und/oder Zuluftanteil Vₛ, Vₒ in der Fahrgastzelle steuert, wie Fig. 1 zeigt, in Abhängigkeit von dem Temperatursignal (lₜ) und dem Signal (l_{CO2}), welches die CO₂-Konzentration der Luft in der Fahrgastzelle repräsentiert, das Gebläse so, dass diesem entweder ausschließlich Umluft (Vₛ = 100 %) aus der Fahrgastzelle zugeführt wird oder ausschließlich Zuluft (Vₒ = 100 %) von außerhalb der Fahrgastzelle zugeführt wird.

Ein Umluftbetrieb wird dabei so lange aufrecht erhalten, bis ein, eine Komfortschwelle angebender Schadgaskonzentrations-Schwellwert CL₂ überschritten wird. Bei Überschreiten des Schadgaskonzentrations-Schwellwertes CL₂ wird auf Zuluftbetrieb (Vₒ= 100%) umgeschaltet und Luft von außerhalb der Fahrgastzelle in die Fahrgastzelle gefördert bis ein Schadgaskonzentrations-Schwellwert CL₁ unterschritten wird. Der Schadgaskonzentrations-Schwellwert CL₁ ist kleiner als der Schadgaskonzentrations-Schwellwert CL₂.

Durch die Kühl/Heizeinrichtung wird die Temperatur in der Fahrgastzelle auf einem gewünschten Niveau gehalten, wobei der Temperatursensor zur Temperaturkompensation als Sensor zur Erfassung der Schadgaskonzentration in der Fahrgastzelle einen Ist-Temperaturwert der Steuereinrichtung für den Umluft- und/oder Zuluftanteil Vₛ, Vₒ in der Fahrgastzelle bereitstellt.

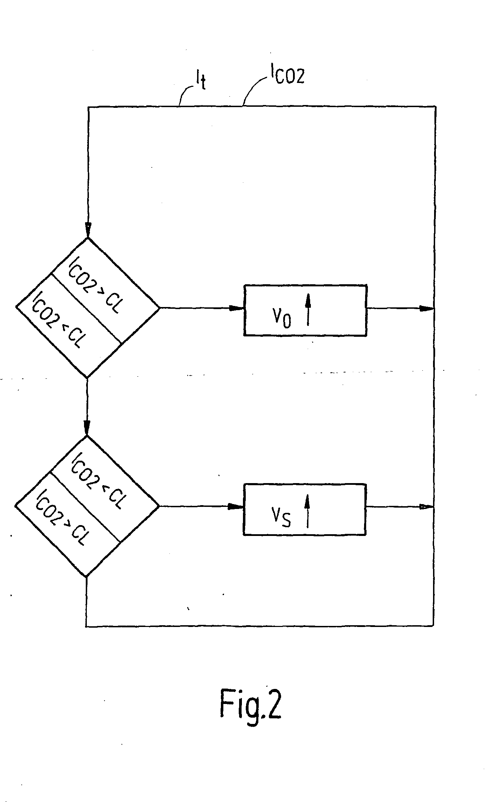

Wie die Figur 2 zeigt, kann es zweckmäßig sein, anstelle des völligen Umschaltens von Umluftbetrieb auf Zuluftbetrieb und umgekehrt, stets einen Mischluftbetrieb mit Umluft und Zuluft in der Fahrgastzelle der Fahrzeugs darzustellen. In Abhängigkeit eines vorgebbaren tolerierbaren Schadgaskonzentrations-Schwellwertes CL für die Luft der Fahrgastzelle wird bei Überschreiten einer zulässigen Toleranzkonzentration an Schadgas, also in dem Ausführungsbeispiel an CO₂, der Zuluftanteil erhöht. Wird der vorgebbare Schadgaskonzentrations-Schwellwert CL um eine zulässige Toleranzkonzentration an Schadgas unterschritten, so wird zur Minimierung des Energiebedarfs des Verfahrens der Umluftanteil der der Fahrgastzelle zugeführten Luft erhöht und der Zuluftanteil reduziert. Die Reduktion des Zuluftanteils kann auch dann sinnvoll sein, wenn aufgrund hoher Außentemperaturen der Fahrgastzelle und erhöhter Temperatur der Zuluft die Zuluft mit entsprechendem Energieaufwand zu kühlen wäre.

Die in den Figuren 1 und 2 dargestellten Verfahren zu Regelung des Umluft- und/oder Zuluftanteils in einer Fahrgastzelle lassen sich mit einer einzigen Kühl/Heizeinrichtung des Fahrzeugs darstellen.

## Patentansprüche

1. Verfahren zur Regelung eines Umluft- und/oder Zuluftanteils (Vₛ,Vₒ) in einer Fahrgastzelle eines Fahrzeugs, insbesondere eines Kraftfahrzeugs, mit einem Sensor zur Erfassung von Schadgaskonzentrationen in der Fahrgastzelle und zur Bereitstellung eines Ansteuersignals (l_{CO2}) einer Steuereinrichtung für den Umluft- und/oder Zuluftanteil (Vₛ, Vₒ) in der Fahrgastzelle, **dadurch gekennzeichnet, dass** der Sensor ein temperaturkompensierter Sensor ist, wobei neben der von dem Sensor gemessenen Schadgaskonzentration die von einem Sensor zur Temperaturkompensation des Sensors zur Erfassung von Schadgaskonzentrationen gemessene Temperatur (lₜ) in der Fahrgastzelle zur Regelung des Umluft- und/oder Zuluftanteils (Vₛ, Vₒ) herangezogen wird.

2. Verfahren nach Anspruch 1, **dadurch gekennzeichnet, dass** die Steuereinrichtung für den Umluft- und/oder Zuluftanteil (Vₛ, Vₒ) die Versorgung der Fahrgastzelle wechselnd mit entweder ausschließlich Umluft oder ausschließlich Zuluft in Abhängigkeit von der Über - oder Unterschreitung eines Schadgaskonzentrations-Schwellwertes (CL) bewirkt.

3. Verfahren nach Anspruch 1, **dadurch gekennzeichnet, dass** die Steuereinrichtung für den Umluft- und/oder Zuluftanteil die Größe des Umluftanteils (Vₛ) in der Fahrgastzelle des Fahrzeugs steuert.

4. Verfahren nach Anspruch 3, **dadurch gekennzeichnet, dass** sich die Größe des von der Steuereinrichtung gesteuerten Umluftanteils (Vₛ) in der Fahrgastzelle in einem vorgebbaren Bereich einer tolerierbaren Schadgaskonzentration in der Fahrgastzelle bewegt.

5. Verfahren nach einem der vorhergehenden Ansprüche, **dadurch gekennzeichnet, dass** die Steuereinrichtung für den Umluft- und/oder Zuluftanteil (Vₛ, Vₒ) bei einer Erhöhung der Außentemperatur der Fahrgastzelle den Umluftanteil (Vₛ) in der Fahrgastzelle erhöht.

6. Verfahren nach einem der vorhergehenden Ansprüche, **dadurch gekennzeichnet, dass** die Steuereinrichtung für den Umluft- und/oder Zuluftanteil (Vₛ, Vₒ) Teil einer Kühl/Heizeinrichtung ist.

7. Verfahren nach einem der vorhergehenden Ansprüche, **dadurch gekennzeichnet, dass** der Sensor zur Erfassung von Schadgaskonzentrationen die Kohlendioxid-Konzentration in der Fahrgastzelle erfasst.

8. Verfahren nach einem der vorhergehenden Ansprüche, **dadurch gekennzeichnet, dass** der Schadgaskonzentrations-Schwellwert in der Fahrgastzelle etwa bei 0,2 Vol.% CO₂ gewählt wird.

9. Verfahren nach einem der vorhergehenden Ansprüche, **dadurch gekennzeichnet, dass** die Steuereinrichtung für den Umluft- und/oder Zuluftanteil (Vₛ, Vₒ) den Umluftanteil (Vₛ) der Fahrgastzelle bei etwa 80 % einstellt, wenn sich eine Person in der Fahrgastzelle befindet.

10. Verfahren nach einem der vorhergehenden Ansprüche, **dadurch gekennzeichnet, dass** der Sensor zur Erfassung von Schadgaskonzentrationen über eine analoge oder eine digitale Schnittstelle mit der Steuereinrichtung für den Umluft- und/oder Zuluftanteil kommuniziert.

## Claims

1. Method for regulating a circulating-air and/or supply-air fraction (Vₛ, Vₒ) in a passenger cell of a vehicle, in particular of a motor vehicle, with a sensor for the detection of pollutant-gas concentrations in the passenger cell and for the provision of an activation signal (l_{CO2}) of a control device for the circulating-air and/or supply-air fraction (Vₛ, Vₒ) in the passenger cell, **characterized in that** the sensor is a temperature-compensated sensor, and, in addition to the pollutant-gas concentration measured by the sensor, the temperature (lₜ) in the passenger cell, measured by a sensor for the temperature compensation of the sensor for the detection of pollutant-gas concentrations, is used for regulating the circulating-air and/or supply-air fraction (Vₛ, Vₒ).

2. Method according to Claim 1, **characterized in that** the control device for the circulating-air and/or supply-air fraction (Vₛ, Vₒ) causes the passenger cell to be fed alternately either with circulating air only or with supply air only as a function of the overshooting or undershooting of a pollutant-gas concentration threshold value (CL).

3. Method according to Claim 1, **characterized in that** the control device for the circulating-air and/or supply-air fraction controls the size of the circulating-air fraction (Vₛ) in the passenger cell of the vehicle.

4. Method according to Claim 3, **characterized in that** the size of the circulating-air fraction (Vₛ), controlled by the control device, in the passenger cell moves within a predeterminable range of an acceptable pollutant-gas concentration in the passenger cell.

5. Method according to one of the preceding claims, **characterized in that** the control device for the circulating-air and/or supply-air fraction (Vₛ, Vₒ) increases the circulating-air fraction (Vₛ) in the passenger cell in the event of a rise in the outside temperature of the passenger cell.

6. Method according to one of the preceding claims, **characterized in that** the control device for the circulating-air and/or supply-air fraction (Vₛ, Vₒ) is part of a cooling/heating device.

7. Method according to one of the preceding claims, **characterized in that** the sensor for the detection of pollutant-gas concentrations detects the carbon dioxide concentration in the passenger cell.

8. Method according to one of the preceding claims, **characterized in that** the pollutant-gas concentration threshold value in the passenger cell is selected, for example, at 0.2% by volume of CO₂.

9. Method according to one of the preceding claims, **characterized in that** the control device for the circulating-air and/or supply-air fraction (Vₛ, Vₒ) sets the circulating-air fraction (Vₛ) of the passenger cell at about 80% when a person is present in the passenger cell.

10. Method according to one of the preceding claims, **characterized in that** the sensor for the detection of pollutant-gas concentrations communicates via an analogue or digital interface with the control device for the circulating-air and/or supply-air fraction.

## Revendications

1. Procédé de régulation de la proportion d'air environnant et/ou d'air amené (Vₛ, Vₒ) dans une cellule de passager d'un véhicule, notamment un véhicule automobile, comprenant un capteur pour détecter des concentrations de gaz nocifs dans la cellule de passager et pour délivrer un signal de commande (I_{CO2}) à un dispositif de commande de la proportion d'air environnant et/ou d'air amené (Vₛ, Vₒ) dans la cellule de passager, **caractérisé en ce que** le capteur est un capteur compensé en température, la température (Iₜ) mesurée dans la cellule de passager par un capteur de compensation de la température du capteur de détection des concentrations de gaz nocifs étant utilisée en plus de la concentration de gaz nocifs mesurée par le capteur pour réguler la proportion d'air environnant et/ou d'air amené (Vₛ, Vₒ).

2. Procédé selon la revendication 1, **caractérisé en ce que** le dispositif de commande pour la proportion d'air environnant et/ou d'air amené (Vₛ, Vₒ) provoque l'approvisionnement de la cellule de passager soit exclusivement avec de l'air ambiant, soit exclusivement avec de l'air amené en fonction du franchissement dans un sens ou dans l'autre d'une valeur de seuil de concentration de gaz nocifs (CL).

3. Procédé selon la revendication 1, **caractérisé en ce que** le dispositif de commande pour la proportion d'air environnant et/ou d'air amené commande le volume de la proportion d'air environnant (Vₛ) dans la cellule de passager.

4. Procédé selon la revendication 3, **caractérisé en ce que** le volume de la proportion d'air environnant (Vₛ) dans la cellule de passager commandé par le dispositif de commande varie dans une plage pouvant être prédéfinie de la concentration de gaz nocifs dans la cellule de passager.

5. Procédé selon l'une des revendications précédentes, **caractérisé en ce que** le dispositif de commande de la proportion d'air environnant et/ou d'air amené (Vₛ, Vₒ) augmente la proportion d'air environnant (Vₛ) dans la cellule de passager en présence d'une augmentation de la température extérieure.

6. Procédé selon l'une des revendications précédentes, **caractérisé en ce que** le dispositif de commande de la proportion d'air environnant et/ou d'air amené (Vₛ, Vₒ) fait partie d'un dispositif de refroidissement/chauffage.

7. Procédé selon l'une des revendications précédentes, **caractérisé en ce que** le capteur de détection des concentrations de gaz nocifs détecte la concentration de dioxyde de carbone dans la cellule de passager.

8. Procédé selon l'une des revendications précédentes, **caractérisé en ce que** la valeur de seuil de concentration de gaz nocifs dans la cellule de passager est choisie approximativement égale à 0,2 % volumiques de CO₂.

9. Procédé selon l'une des revendications précédentes, **caractérisé en ce que** le dispositif de commande de la proportion d'air environnant et/ou d'air amené (Vₛ, Vₒ) règle la proportion d'air environnant (Vₛ) de la cellule de passager à environ 80 % lorsqu'une personne se trouve dans la cellule de passager.

10. Procédé selon l'une des revendications précédentes, **caractérisé en ce que** le capteur de détection des concentrations de gaz nocifs communique avec le dispositif de commande de la proportion d'air environnant et/ou d'air amené par le biais d'une interface analogique ou numérique.
